# EUROPEAN PATENT SPECIFICATION

(11) **EP 1 316 003 B1**
(45) Date of publication and mention of the grant of the patent: **15.11.2006**
(21) Application number: 01968444.8
(22) Date of filing: 05.09.2001
(51) Int. Cl.: G05B 19/418, G05B 19/042

(54) **DISPATCHING COMPONENT FOR ASSOCIATING MANUFACTURING FACILITY SERVICE REQUESTORS WITH SERVICE PROVIDERS**
TEILEVERSENDUNG ZUR VERBINDUNG VON DIENSTANFORDERER EINER FERTIGUNGSANLAGE MIT DIENSTLIEFERANTEN
COMPOSANTE DE REPARTITION PERMETTANT D'ASSOCIER DES DEMANDEURS DE SERVICES D'INSTALLATIONS DE FABRICATION A DES FOURNISSEURS DE SERVICES

(30) Priority: 06.09.2000 US 656031
(43) Date of publication of application: 04.06.2003
(73) Proprietor: APPLIED MATERIALS, INC., Santa Clara, California 95052 (US)
(72) Inventor: CHI, Yuehshian, T., San Jose, CA 95129 (US); HAWKINS, Parris, C., M., Pleasanton, CA 94566 (US); HUANG, Charles, Q., Union City, CA 94587 (US); JIN, Qiaolin, San Jose, CA 95129 (US); MOHAN, Shantha, Palo Alto, CA 94306 (US); WARD, Nicholas, A., San Jose, CA 95129 (US)
(74) Representative: Blatchford, William Michael
(86) International application number: PCT/US2001/027407
(87) International publication number: WO 2002/021227

(56) References cited:
- EP-A- 0 747 795
- US-A- 4 698 766
- US-A- 5 231 585
- US-A- 5 832 224
- US-A- 5 870 306
- US-A- 6 112 130

## Description

### FIELD OF THE INVENTION

The present invention relates generally to manufacturing automation and more particularly to automated processes for producing semiconductor devices.

### BACKGROUND OF THE INVENTION

US 6,112,130 discloses a semiconductor manufacturing execution system in which a plurality of process flows are used to make one type of product thereby allowing accurate process management to be possible. The semiconductor manufacturing execution system comprises means for forming, for each lot relating to one type of product, a process flow in which wafer processing conditions are described through a plurality of processes, and means for wafer processing for each lot of one type of semiconductor product in accordance with the process flow.

US 5,870,306 discloses an automatic programming system that automatically decides which machining system should perform which machining step and generates a machining program therefor. The programming system utilises a machining step information, a workpiece information, a tool information and a machining step corresponding workpiece information. Moreover, a machining system for actually performing the machining step is decided when there are plural workable machining systems on the basis of a system priority rule information which defines a preferred machining system when there are plural workable machining systems.

US 5,832,224 discloses a system for managing an assemblage of entities that interface with the assemblage for control of primary information handling functions and further interface with the system to permit the carrying out of management functions. The system includes management modules adapted to carry out management functions by independently interpreting and executing commands. A parser includes a best-match unit for determining the most exact match for fields of a command, by searching first for exact matches for fields and then for wildcard matches for fields, or by searching first for exact matches for fields, then for ellipses matches for fields.

Semiconductor manufacturing is an extremely complex, multi-step process that is subject to strict manufacturing requirements and production schedules. These manufacturing processes are typically performed in large fabrication facilities, often incorporating dozens of tools involved in the various stages of the fabrication process.

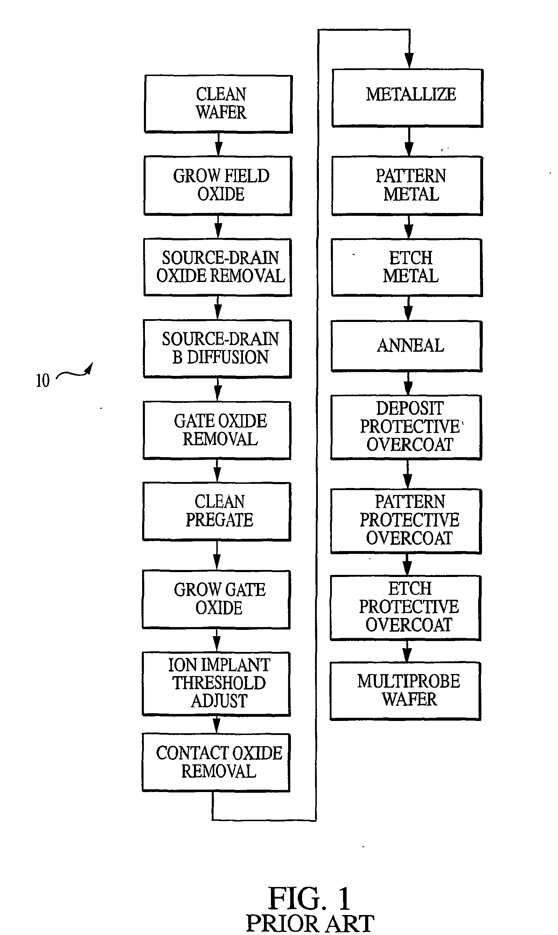

Typical semiconductor devices are manufactured using a complex procedure, involving, for example, numerous oxidation, etching, and photolithography processes. One example of such a process or service plan is depicted by process 10 in Fig. 1. Each step of process 10 generally requires a high degree of product and process control. For example, impurities and particulate contamination in the processing materials must be strictly controlled. Similarly, control processing parameters such as temperature, pressure, gas flow rates, processing time intervals and input sputter power must also be closely monitored.

To complicate matters, each step of process 10 may, in turn, require hundreds of other intricate and complicated operations or sub-steps, any of which can be highly dependent on one or more preceding steps. For instance, during a photolithography procedure, precise alignment of a wafer with respect to a mask is critical. An error during alignment or in the overlay of the etch masks could form electrical short defects between too densely packed interconnects. Each step in the manufacturing process must therefore be closely monitored, with materials carefully regulated, and timing carefully controlled.

To address these needs, automated systems or semiconductor manufacturing execution systems (MES) were implemented to allow process engineers and facility operators to control and supervise the entire manufacturing process. Typically accessed through a single user interface, these MES allowed plant managers to automate processing by managing tool and lot data, coordinating resources such as service requestors and service providers, scheduling the dispatch of services, etc., all in a centralised manner.

While these systems allowed the scheduling and coordination of the various tools and material in a facility, these MES were static and comprehended only simple productions tasks. For instance, little or no execution control was provided and, as a result, processing required the decision making of process engineers or operators. Thus, each process engineer or operator was required to initiate each individual action, such as matching lot or material requiring a particular service with a tool or machine offering and capable of providing the corresponding operation. However, by placing the decision making responsibilities on the operators and engineers, the goal of automation was inadvertently frustrated.

Furthermore, these MES failed to resolve equipment status and machine availability issues during execution of the process. Thus, urgent information regarding the status of a particular tool was oftentimes hidden or unavailable. Unscheduled maintenance or off-line time for tools resulted in interruptions in the process flow. As a result, "bottlenecks" were frequently created, ultimately reducing the processing facility's wafer fab yield.

Consequently, there is a need for a manufacturing scheme capable of monitoring facility resources, such as tools and material, during service plan execution to provide information regarding resource status and/or machine states. Similarly, there is a need for a process capable of utilizing this information during the service plan execution to dynamically match or associate service providers currently capable of providing a particular service with a service requestor requiring that same service.

### SUMMARY OF THE INVENTION

The present invention increases the efficiency and productivity of a manufacturing facility by providing a system, method and medium for dynamically matching service requestors with service providers that are currently capable of providing a requested service. In particular, communications or messages are initially transmitted by service providers indicating that they are capable of providing one or more services. Each of the services capable of being provided are then determined or identified by monitoring the individual service providers. For instance, any updates to the service providers' machine states are monitored to facilitate identification of the actual services currently capable of being provided. In a manner similar to the communications received from the service providers, service requestors transmit requests requesting required services. Subsequently, the services offered and the services requested are listed in a dispatch station that is associated with a corresponding service type (e.g., etching). At the dispatch station, the services offered and services requested are grouped together to form service requestor/service provider groups (e.g., a request for an etch that is paired with one or more providers of etching services is an example of one such group). From there, the service requestor/service provider groups may be ranked and provided as options for dispatch. Then, a single service requestor/service provider group is selected automatically, semiautomatically, or manually, and validated according to user-defined run rules before being dispatched to fulfill the service demand.

### BRIEF DESCRIPTION OF THE DRAWINGS

FIG. 1 illustrates a prior art semiconductor fabrication process;
FIG. 2 depicts one example of manufacturing facility suitable for implementing and utilizing various aspects and principles of the present invention;
FIG. 3 depicts one example of a block diagram illustrating various computing processes implemented in a computing system of FIG. 2 utilizable for carrying out various concepts of the present invention;
FIG. 4 depicts one example of a set of dispatch stations implemented in a resource coordinator component of the present invention;
FIG. 5 depicts one example of a modeling procedure used to model a service plan for the manufacturing facility of FIG. 2;
FIGS. 6-8 depict one example of a process used to dispatch and execute services at run time in the manufacturing facility of FIG. 2;
FIG. 9 is a flow diagram describing a processing routine used to model, dispatch and execute services in the manufacturing facility of FIG. 2;
FIG. 10 is a flow diagram describing a modeling process implemented in the routine of FIG. 9;
FIG. 11 is a flow diagram describing a process used to match service requestors with service providers, in accordance with the principles of the present invention;
FIG. 12 is a flow diagram describing a number of dispatch modes used to select a dispatch option, in accordance with the principles of the present invention;
FIG. 13 is a block diagram representation of one example of a computing system utilizable in the manufacturing facility of FIG. 2; and
FIG. 14 illustrates one example of a memory medium which may be used for storing a computer implemented process of the present invention.

### DETAILED DESCRIPTION OF THE INVENTION

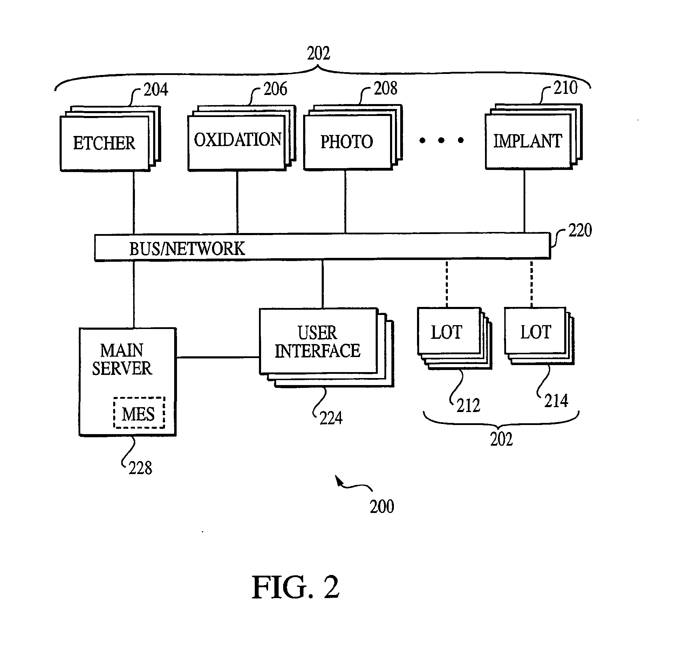

FIG. 2 illustrates one example of manufacturing facility suitable for implementing and utilizing various principles of the present invention. Referring now to FIG. 2, an automated semiconductor fabrication facility 200 is depicted which may be used in the production of semiconductor devices by executing one or more manufacturing service plans. Facility 200 includes a number of resource nodes 202, connected to one another via data bus 220, and with a number of user interfaces 224 and computing main server 228. Each resource node 202 is associated with and used to monitor a resource (i.e., either a service provider or service requestor, as discussed below) of fabrication facility 200. In embodiments contemplated by the present invention, resources nodes 202 may be implemented by one or more computer processes or computing servers located at or in connection with their respective resource. For instance, the resource nodes may include hardware or software implemented in, for example, a computing processor located at a resource. In other instances, the resource nodes may include computing processors and/or interfaces used to read or monitor information such as a bar coded data written to a material carrier or the like. The resources associated with resource nodes 202 include the various processing tools and entities or material lots utilized in a typical semiconductor manufacturing plant. Individual resources may be classified as either service providers or service requestors depending on whether the resource requires services or is able to perform services. For example, resource nodes 204 may be associated with numerous instances of etching devices. When the etching devices offer provisioning of etch services, they are service providers. In contrast, when the etchers are due for maintenance or repair, they become service requestors. The same holds true for the nodes 206, 208, and 210, which are associated with other tools of exemplary facility 200 (e.g., oxidation, photolithography, implanting devices, and the like). On the other hand, nodes 212 and 214 are associated with particular lots or material requiring services such as those offered by the service providers listed above. In these cases, as mentioned above, the material or lots are typically stored on carriers or the like with any information regarding the lots being collected via, for example, a light pen or other similar device.

It should also be noted that although the embodiment of FIG. 2 is depicted as being implemented in a semiconductor manufacturing facility, the concepts of the present invention can similarly be utilized in other settings as well. For example, the processes and concepts of the present invention may be implemented in any other automated manufacturing facilities such as, for instance, automobile factories, food or beverage production facilities, furniture factories, or the like.

In addition to resource nodes 202 and the resources associated therewith, manufacturing facility 200 also includes a number of user interfaces 224, which advantageously may be used to monitor the status of the various components of facility 200 during execution of the facility service plans. Similarly, as will be discussed below, user interfaces 224 may also be used by, for example, a production engineer or operator, to enter modeling data and to select particular resources to effect certain results.

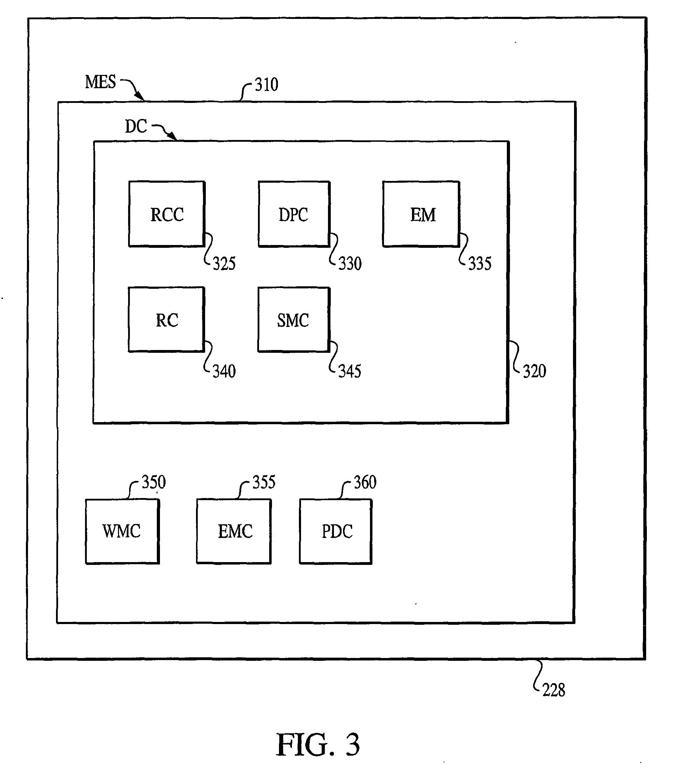

In accordance with the principles of the present invention, the individual operations or services of the facility service plans as well as operation or processing of the resources are coordinated by one or more computing processes implemented in main computing server 228 (or a plurality thereof), one example of which is depicted in FIG. 3. Referring now to FIG. 3, a manufacturing execution system (MES) 310 is illustrated as being implemented in main computing server 228. Among other things, embodiments of the present invention contemplate that MES 310 is responsible for automating, integrating, and coordinating each of the services and resources required to execute or complete the facility service plans.

In the exemplary embodiment depicted in FIG. 3, MES 310 is comprised of a number of computing components. For example, MES 310 includes a dispatching component 320, a work management component 350, an equipment management component 355, and a process director component 360. Dispatching component 320, in turn, includes a resource coordinator component 325, a dispatch processing component 330, an event manager 335, a run rules component 340 and a service management component 345. In conjunction with the other components of MES 310, dispatching component 320 advantageously facilitates modeling of the facility resources before run time, including each of the service requestors and service providers, and subsequently allows execution of the facility service plans in a manner which matches service requestors requesting a particular service with service providers currently capable of providing the requested service.

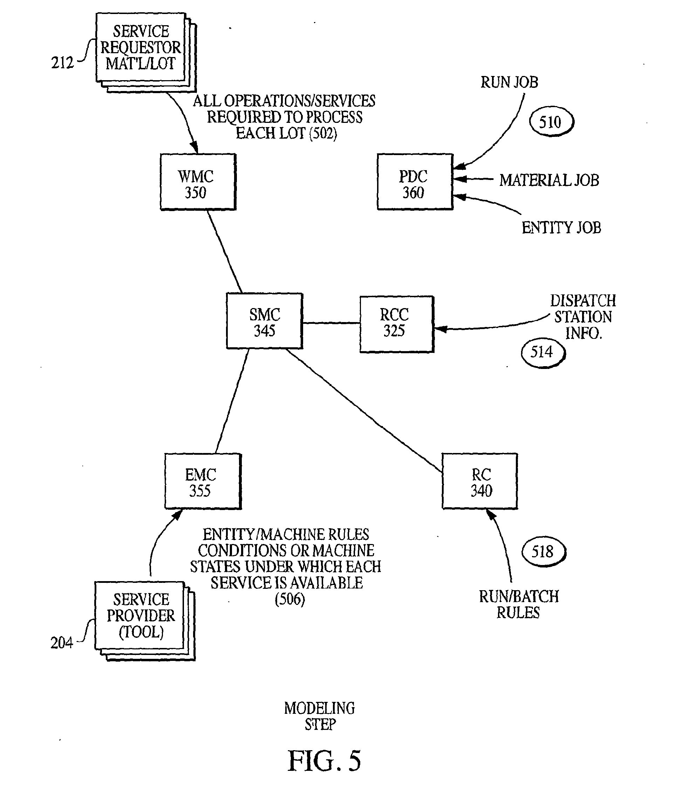

Specifically, during service plan modeling, (an example of which is discussed in conjunction with Figure 5, below) process director component 360 serves as an editor to accept workflows or the preprogrammed sequence of steps for a job. For example, in some embodiments, an operator or engineer utilizes process director component 360 to enter any or all such modeling data. For instance, process director component 360 accepts the steps which control, for example, the operation of a particular tool (i.e., material or entity job). Similarly, the steps could be directed to the services required for a certain lot or material (i.e., material or lot job). Likewise, the steps could include each task required to perform an individual service (i.e., run job). Then, at run time, process director component 360 executes these workflows or jobs. More particularly, as will be discussed below, process director component 360 accepts requests from work management component 350 or equipment management component 355 to launch these jobs thereby fulfilling the service requests.

Equipment management component 355, on the other hand, allows, for example, an operator to define a list of services capable of being provided by a particular service provider (e.g., a particular tool or machine). In addition, equipment management component 355 is also utilized to define the conditions or machine states under which each service may be performed. For example, during modeling, an operator indicates that in order for a particular etcher to provide a certain etch service, the etcher must have at least two currently operational chambers. If these chambers are not operational, then that etcher is not capable of providing the etch service. At run time then, the current availability of each service provider to, e.g., provide a certain service may be obtained by querying equipment management component 355. In addition, also at run time, equipment management component 355 may be utilized (in conjunction with process director component 360) to launch or start a workflow relating to a particular service provider.

Like equipment management component 355, work management component 350 is also utilized during a modeling stage. However, instead of modeling service providers, work management component 350 is directed to service requestors (e.g., particular products). For instance, during modeling, work management component 350 is used to define attributes for a particular lot or material. Thus, each of the attributes required for particular product, such as a chip, can be entered into work management component 350.

As depicted in FIG. 3, dispatching component 320 is comprised of, for example, five individual components, each responsible for a variety of processing functions. For instance, service management component 345 is used to model the list of services utilized in the manufacturing process of the facility. To do this, it is envisioned that the services required to effect the plan, which when executed result in a final product, are entered into service management component 345. For example, each step required to produce a particular product, including any required or necessary order or sequence (i.e., any sequential steps) is entered. Furthermore, the steps may be conditional steps requiring satisfaction of certain specifications or requirements. For example, an etching service may be required to be repeated until certain specifications are met, before allowing the process to continue to a deposition step. In addition, run rules component 340 implements a set of run or business rules used to govern each service plan. More particularly, these run rules may be implemented to increase efficiency or for some other similar purpose. For example, one run rule may require that a particular etcher be loaded with at least three lots before commencing an etching service. In the same manner, another run rule may require services to be performed only on non-test lots. Still yet another exemplary run rule may include requiring a common tool recipe for a particular lot. These run rules may also be weighted to identify preferred methods of performing a service. For instance, it may be preferable to have a service performed by a first etcher, which can provide a particular service using only a single chamber, rather than a second etcher, which requires two chambers. In this case, a run rule for that service would place a greater weight or ranking on the first etcher. In these embodiments, the rules are entered during modeling by, for instance, an operator or engineer via user interface 224 or the like. At run time, run rules component 340 generates dispatch lists comprised of weighted service requestor/service provider groups. (As discussed previously in the Summary section, and further discussed below) Upon selecting one service requestor/service provider group, either automatically by MES 310 or manually by an operator (as mentioned further below), run rules component 340 is used to validate or ensure that the selected group complies with all applicable run rules.

Dispatching component 320 also includes resource coordinator component 325. Resource coordinator component 325, during modeling, receives information concerning a number of user defined dispatch stations. For example, a user may wish to define a dispatch station to include all of the service providers located in a particular location in facility 200. In the same manner, a user may define a dispatch station to include a number of similar tools (e.g., a number of etchers). Whatever the case, these dispatch stations are implemented in resource coordinator component 325 and facilitate matching or grouping of service providers and service requestors according to the respective services provided or services requested. As will be discussed below, at run time, resource coordinator component 325 receives communications or requests from the service providers and service requestors respectively indicating the services currently capable of being provided and the services requested. The services offered and the services requested are placed or associated with a corresponding dispatch station. Upon this addition to a dispatch station, resource coordinator component 325 publishes a message indicating that a dispatch station has been updated. Then, if a valid resource requestor/resource provider group ultimately results from the addition to the dispatch station, resource coordinator component 325 launches a run job by invoking process director component 360. After completion thereof, resource coordinator component 325 releases the resources associated with the completed job from their dispatch station.

The messages published by resource coordinator component 325 are monitored by event manager 335 or a special instance of event manager 335. Upon receiving a message, event manager 335 invokes dispatch processing component 330 to query resource coordinator component 325 for a list of options or candidate resources. Event manager 335 then passes this list to run rules component 340 which in turn generates a prioritized list of dispatch options. As will be discussed below, these dispatch options constitute each of the resource requestor/resource provider groups from a dispatch station weighted according to the run rules implemented by run rules component 340. In addition to querying rules component 340 for the prioritized dispatch options, dispatch processing component 330, in a fully automatic embodiment of the present invention, automatically selects the first or highest ranked option from the dispatch list for validation and dispatch. Furthermore, as will be discussed below, semiautomatic and manual embodiments are also possible. In the former case, a ranked list of dispatch options is presented to, for example, an operator, who in turn selects an option for validation and dispatch. In the manual embodiments, an option is selected by an operator without assistance from dispatching component 320. As mentioned above, each job is validated by run rules component 340, and dispatch is initiated by calling resource coordinator component 325.

Although processing facility 200 is described as being operated in conjunction with 310 MES of FIG. 3, it is to be understood that other alternatives are possible. In this regard, it is to be understood that utilization of the distinct processing components of FIG. 3 is for convenience only, and that any number of computing processes may just as easily be implemented. For instance, any single component or any combination of components of FIG. 3 may be replaced with any one or more similar computing processes. For example, it is possible that a single process may be substituted in place of resource coordinator component 325 and process director component 360. Likewise, event manager 335 may be replaced with two functionally distinct processes. Other alternatives are also possible. Furthermore, it is also possible within the scope of the present invention that the components of FIG. 3 may reside in physically distinct computing nodes or systems, such as, for instance some type of distributed computing environment. For example, it is possible that run rules component 340 could be implemented in a system located off-site. Similarly, equipment management component 355 could be implemented at a resource node.

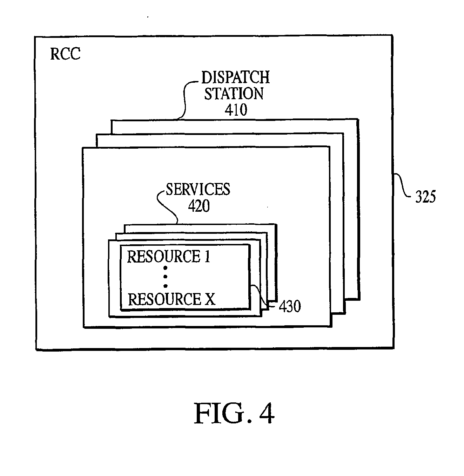

Referring to FIG. 4, embodiments of the present invent contemplate that a number of dispatch stations 410 are implemented in resource coordinator component 325. As mentioned above, each dispatch station 410 is associated with one or more services, and may represent the points within a factory where there is a need to prioritize work. The services associated with each dispatch station 410 may be defined during, for example, a modeling stage by a process engineer or operator. As one example, the services may be grouped with other similar services. Thus, a number of etch services may be grouped in one dispatch station. Likewise, a number of oxidation services may be grouped in a second distinct dispatch station. As another example, the services may be grouped according to physical location. Hence, all of the resources in one location in facility 200 may be placed in one dispatch station and all of the resources in a second location may be placed in a second dispatch station.

Each dispatch station 410 serves as an exchange or marketplace for matching service requests with service offers by managing a list of services and also a list of resources (i.e., service providers and/or service requestors) for each service. For example, at run time, service offers and service requests received by resource coordinator component 325 are associated with an appropriate dispatch station 410, where they may be matched. As illustrated in FIG. 4, each dispatch station 410 implements a list of services 420, with each service on the list, in turn, maintaining a list of resources. When service offers and service requests are received, they are placed or associated with an appropriate service. Thus, a service offer or request from a service provider or requestor is placed in a resource list of a specific service in each dispatch station associated with that offered service.

Each match between service providers and service requestors forms a matched service provider/service requestor group, which is then listed as one dispatch option on a dispatch list 430. For example, if Etcher 10 can provide Service A on Lots A, B, and C, then one dispatch option on a dispatch list for Service A indicates that Etcher 10 is capable of providing the service requested by Lots A, B*, and C. Similarly, if the same service can be provided by Etcher 20 for Lots A, E, F, and G, then a second dispatch option on the same list indicates that Etcher 20 is capable of providing the service requested by Lots A, E, F, and G. In embodiments contemplated by the present invention, if a dispatch list is selected and a run job is launched for execution, these service providers and service requestors remain on a resource list for a specific service, at the dispatch station where the run job was launched, until after their service has been completed by the run job. At that time the resources are released.

Referring now to FIG. 5, one example of a modeling step utilized by the present invention is depicted. During this step, information and data regarding a service plan are entered. For example, data pertaining to the resources of the facility are entered into work management component 350 and equipment management component 355. In particular, the operations or services required to process each lot or material are inputted into work management component 350 (step 502). Likewise, the tool or machine rules, including the services capable of being provided by a tool as well as the conditions under which those services may be provided, are entered into equipment management component 355 (step 506). In addition, the run, material, and entity jobs or workflows are entered into process director component 360 (step 510). The dispatch station information, including the services associated with each dispatch station 410, are entered into resource coordinator component 325 (step 514). Also, the run rules are entered into rules component 340 (step 518). After modeling has been completed, processing continues with launching of the modeled material or tool workflows (or jobs).

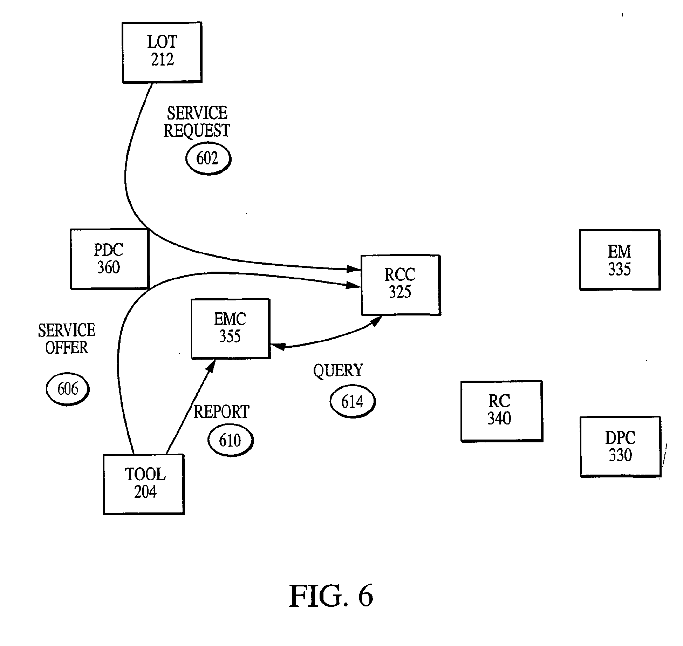

An example of the execution of one service or operation is now described with reference to FIGS. 6-9. As depicted in FIG. 6, after a material workflow has been launched, a request is transmitted from lot node 212 to resource coordinator component 325 via process director component 360 requesting a particular service (step 602). A similar request or communication is transmitted from tool node 204 to resource coordinator component 325 via process director component 360 indicating that it is available to provide one or more services (step 606). In addition to this communication, tool node 204 also reports any changes in its status or machine states to equipment manager component 355 (step 610). For example, a etcher may at this time report that one of its chambers is in use. After receiving the tool node's report, equipment manager component 355 provides an updated list of services that can be provided by the tool to resource coordinator component 325 (step 614). By doing so, resource coordinator component 325 identifies the actual services currently capable of being provided by an individual tool. Using this information, resource coordinator component 325 associates or places each service into an appropriate dispatch station (not shown). In other embodiments, the communication may include an indication of a dispatch station to be joined.

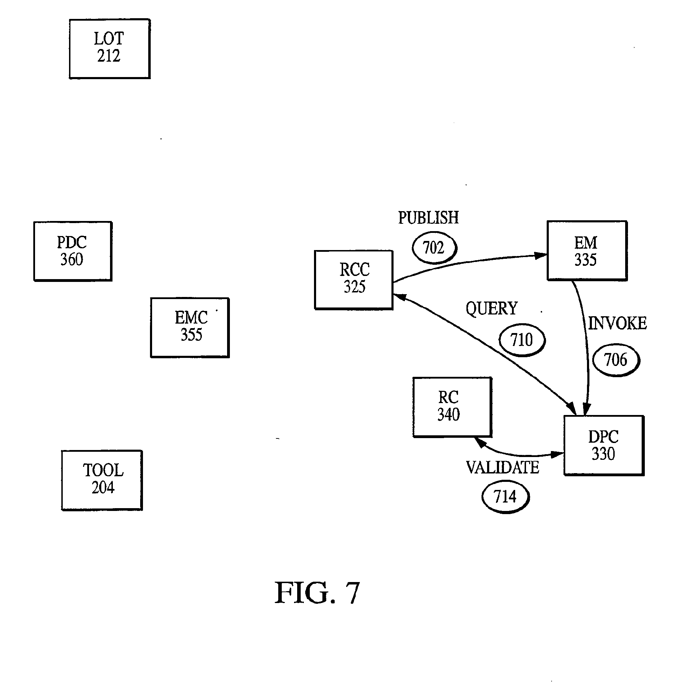

As depicted in FIG. 7, after a resource is added to a dispatch station, resource coordinator component 325 publishes a resource event (step 702). In addition to dispatch station changes, resource coordinator component 325 also publishes resource events in response to pauses in processing, or if processing is aborted. Similarly, a resource event is also published when a resource is released from a dispatch station after a run job has been completed. Subscribing to the resource coordinator component's publications is event manager 335. Upon receiving a publication, in this example event manager 335 invokes dispatch processing component 330 in an attempt to execute a run job (step 706). In response to the event manager's invocation, dispatch processing component 330 first queries resource coordinator component 325 for a dispatch list (step 710). Subsequently, one dispatch option (i.e., a service requestor/service provider group) is selected. As will be discussed below, the method used to select an option depends on whether an automatic, semiautomatic, or manual mode is being utilized. Whatever method is used, the selected dispatch option is next validated by run rules component 340 (step 714). As mentioned above, run rules component 340 ensures that the selected dispatch option complies with each of the service rules.

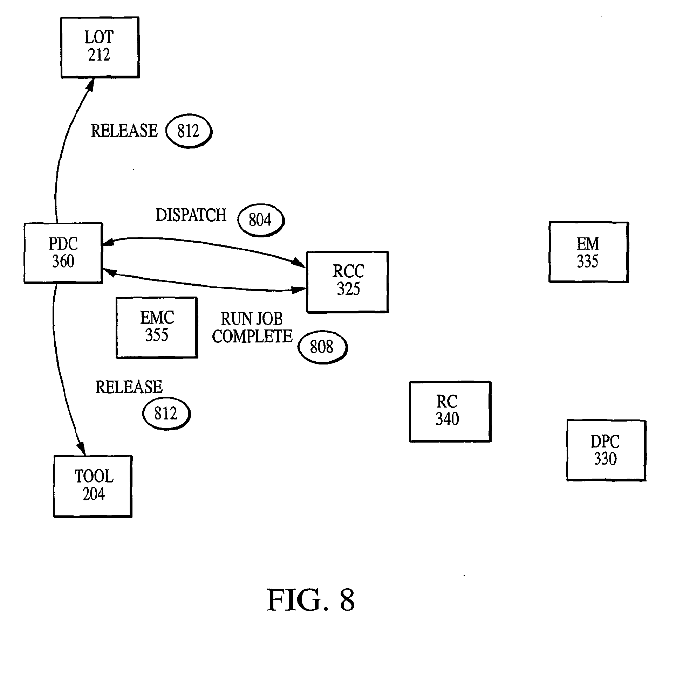

Referring to FIG. 8, subsequent to validating the selected dispatch option, resource coordinator component 325 dispatches the selected option's run job by calling process director component 360 (step 804). From there, process director component 360 executes provisioning of the service by, for example, calling a material handler to move a lot or material to a machine and start execution of a run job to fulfill the service demand. Once the service has been completed, process director component 360 informs resource coordinator component 325 (step 808). In response, resource coordinator component 325 releases each of the resources to return to process director component 360 (step 812). Furthermore, each resource associated with the completed service is removed from the resource list of the service associated with the dispatch station that launched the run job.

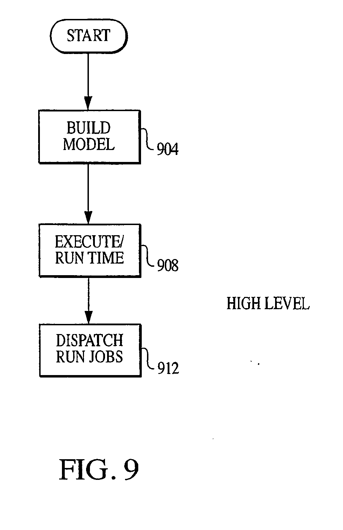

The processing undertaken by the present invention is now described with reference to FIGS. 9-12. Referring first to FIG. 9 as an overview, processing commences with modeling of the workflows for material, tools, and run jobs (step 904). Subsequently, the workflows are executed (step 908). During the course of processing or execution, one or more run jobs are dispatched to perform a number of requested services (step 912).

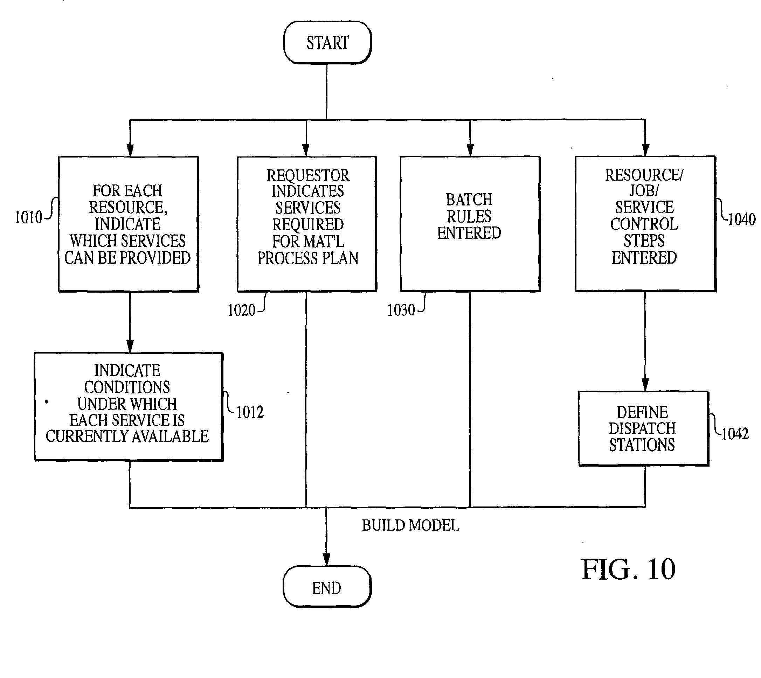

FIG. 10 illustrates a modeling stage or process of the present invention. Starting with the tools or service providers, each service capable of being provided by a particular resource is entered into equipment management component 355 (step 1010). Subsequently, the conditions which must be met in order for a particular resource to provide each of its services are entered (step 1012). In a similar manner, the services required by each lot or material are entered into work management component 350 (step 1020). Likewise, each of the run rules utilized in the service plan are entered into rules component 340 (step 1030). As indicated above, these run rules run may be used to govern each service plan by requiring compliance before dispatching a job. In addition, the run, material, and entity jobs or workflows are also entered (step 1040), along with dispatch station information, including the services associated with each station 410 (step 1042). Modeling then ends once the above information has been entered.

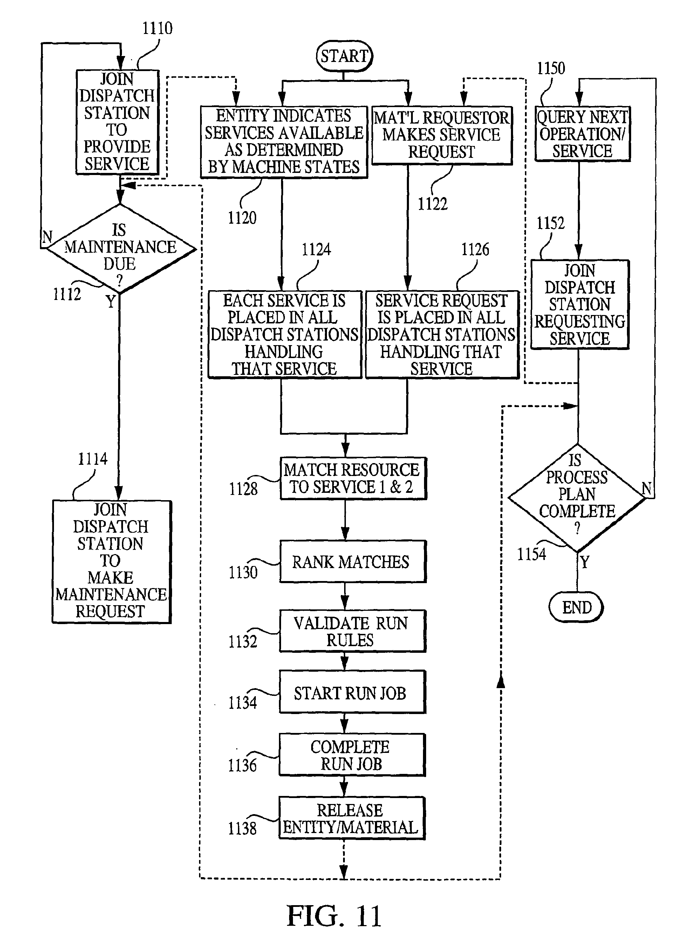

After modeling has been completed, the workflows may be initiated. Referring to FIG. 11, one example of an entity/tool/service provider workflow or job is depicted by steps 1110-1114. More specifically, the workflow directs the tool to join a dispatch station to provide one or more services (step 1110). As will be discussed below, the tool or service provider then is matched with one or more service requestors and provides a service before it is ultimately released (see, steps 1120-1138). After being released, the tool workflow checks whether maintenance is due (step 1112). If maintenance is not due, the tool workflow returns to step 1110 prompting the tool to again join a dispatch station to provide service. This workflow repeats until it is terminated. However, if maintenance is due, the tool joins a dispatch station and makes a maintenance request (step 1114). At that point, the tool or service provider becomes a lot or service requestor, and follows a material or lot workflow rather than the tool workflow.

One example of a material/lot/service requestor workflow or job is depicted by steps 1150-1154. Initially, the lot or material queries work management component 350 for its next required operation or service (step 1150). After identifying the next required service or operation, the material or lot is directed to request resource coordinator component 325 for its required service (step 1152). From there, as will be discussed below, the material or lot is matched with a service provider and possibly other service requestors to receive a service before it is ultimately released (see, steps 1122-1138). After resource coordinator component 325 releases the lot or material, the material workflow checks whether the plan is complete (step 1154). If the plan has been completed, processing ends. However, if the plan has not been completed, processing for the material advances to provide the remaining services required before completion.

After being directed to provide a service (step 1110), a tool indicates to resource coordinator component 325 that it is now available to provide a service (step 1120). Then, as discussed above, resource coordinator component 325 identifies which services are currently capable of being provided from equipment management component 355 as determined according to the tool status. Subsequently, the service capable of being provided is placed in each dispatch station associated with that service (step 1124).

Likewise, after being directed to request a service, a lot transmits the request to resource coordinator component 325 (step 1122). Subsequently, the request is placed in each dispatch station associated with the requested service (step 1126).

From there, each service request is matched with a service offer to form a number of dispatch options or service provider/service requestor groups (step 1128). Furthermore, it is important to note that any number of service requestors and/or service providers may be encompassed by a single group. For instance, a single etcher may be able to provide a requested etch service to three individual lots. This service provider/service requestor group would then consist of four resources. Subsequently, the dispatch options or service provider/service requestor groups are ranked according to the run rules of run rule component 340 (step 1130).

As described above, one dispatch option is then selected, either automatically by the system, semiautomatically in conjunction with an operator, or manually by an operator and then validated using run rules component 340 (step 1132). After validation, the run job is initiated (step 1134), and completed (step 1136) before releasing the service providers/service requestors from the dispatch station where the run job was launched (step 1138).

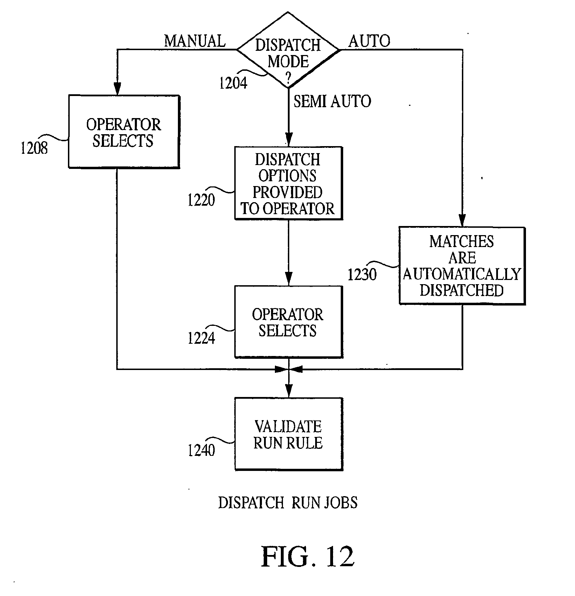

The dispatch modes mentioned above are now described with reference to FIG. 12. Initially, the process identifies or determines whether the run job is to be dispatched manually, semiautomatically, or automatically (step 1204). If dispatch is to be made manually, a process engineer or operator manually selects via, for example, user interface 224, the tools to be utilized for performing a particular service, without any assistance from the system (step 1208). If dispatch is semiautomatic, the weighted dispatch options are presented to an operator, who then selects based on the available options (step 1224). If dispatch is automatic or fully automatic, the highest ranked option is automatically selected by dispatch processing component 330 (step 1230). Furthermore, if a number of options are equally ranked, dispatch processing component 330 selects an option according to a first-in, first-out policy (FIFO) or other similar method. After an option has been selected, run rules component 340 validates the selected option to ensure compliance with the process rules (step 1240).

It should be understood that the flow diagrams depicted herein are exemplary in nature. There may be variations to these diagrams without departing form the spirit of the invention. For instance, the steps may be performed in a different order, or steps may be added, deleted or modified. It is, therefore, to be understood that within the scope of the appended claims the invention may be practiced otherwise than as specifically described.

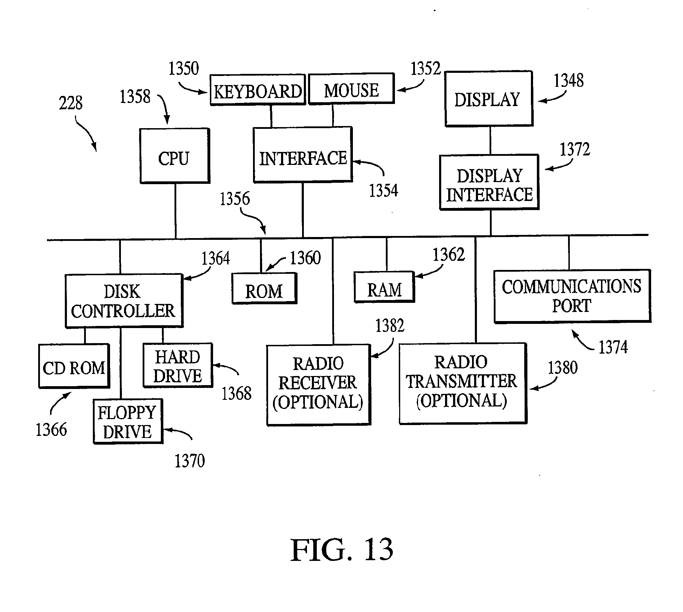

FIG. 13 illustrates a block diagram of one example of the internal hardware of main computing server 228 of FIG. 2. A bus 1356 serves as the main information highway interconnecting the other components of system 228. CPU 1358 is the central processing unit of the system, performing calculations and logic operations required to execute the processes of the instant invention as well as other programs. Read only memory (ROM) 1360 and random access memory (RAM) 1362 constitute the main memory of the system. Disk controller 1364 interfaces one or more disk drives to the system bus 1356. These disk drives are, for example, floppy disk drives 1370, or CD ROM or DVD (digital video disks) drives 1366, or internal or external hard drives 1368. These various disk drives and disk controllers are optional devices.

A display interface 1372 interfaces display 1348 and permits information from the bus 1356 to be displayed on display 1348. Display 1348 is also an optional accessory. For example, display 1348 could be substituted or omitted. Communications with external devices such as the other components of the system described above, occur utilizing, for example, communication port 1374. For example, port 1374 may be interfaced with bus/network 220 of FIG. 2. Optical fibers and/or electrical cables and/or conductors and/or optical communication (e.g., infrared, and the like) and/or wireless communication (e.g., radio frequency (RF), and the like) can be used as the transport medium between the external devices and communication port 1374. Peripheral interface 1354 interfaces the keyboard 1350 and mouse 1352, permitting input data to be transmitted to bus 1356. In addition to these components, system 228 also optionally includes an infrared transmitter 1378 and/or infrared receiver 1376. Infrared transmitters are optionally utilized when the computer system is used in conjunction with one or more of the processing components/stations that transmits/receives data via infrared signal transmission. Instead of utilizing an infrared transmitter or infrared receiver, the computer system may also optionally use a low power radio transmitter 1380 and/or a low power radio receiver 1382. The low power radio transmitter transmits the signal for reception by components of the production process, and receives signals from the components via the low power radio receiver. The low power radio transmitter and/or receiver are standard devices in industry.

Although system 228 in Fig. 13 is illustrated having a single processor, a single hard disk drive and a single local memory, the system 228 is optionally suitably equipped with any multitude or combination of processors or storage devices. For example, system 228 may be replaced by, or combined with, any suitable processing system operative in accordance with the principles of the present invention, including sophisticated calculators, and hand-held, laptop/notebook, mini, mainframe and super computers, as well as processing system network combinations of the same.

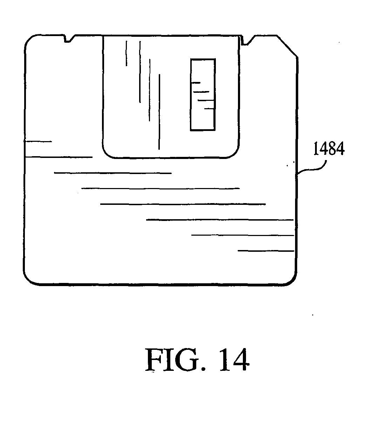

FIG. 14 is an illustration of an exemplary computer readable memory medium 1484 utilizable for storing computer readable code or instructions. As one example, medium 1484 may be used with disk drives illustrated in FIG. 13. Typically, memory media such as floppy disks, or a CD ROM, or a digital video disk will contain, for example, a multi-byte locale for a single byte language and the program information for controlling the above system to enable the computer to perform the functions described herein. Alternatively, ROM 1360 and/or RAM 1362 illustrated in FIG. 13 can also be used to store the program information that is used to instruct the central processing unit 1358 to perform the operations associated with the instant processes. Other examples of suitable computer readable media for storing information include magnetic, electronic, or optical (including holographic) storage, some combination thereof, etc.

In general, it should be emphasized that the various components of embodiments of the present invention can be implemented in hardware, software or a combination thereof. In such embodiments, the various components and steps would be implemented in hardware and/or software to perform the functions of the present invention. Any presently available or future developed computer software language and/or hardware components can be employed in such embodiments of the present invention. For example, at least some of the functionality mentioned above could be implemented using Visual Basic, C, C++, or any assembly language appropriate in view of the processor(s) being used. It could also be written in an interpretive environment such as Java and transported to multiple destinations to various users.

It is also to be appreciated and understood generally that the specific embodiments of the invention described hereinbefore are merely illustrative of the general principles of the invention. Various modifications may be made by those skilled in the art consistent with the principles set forth hereinbefore.

## Claims

1. A method for associating service requestors (212) with service providers (204), said method comprising the steps of:
(1) receiving a communication from each of a plurality of resources (430), each resource comprising either a service requestor or a service provider, each communication also including one of an offered or requested service;
(2) associating each resource with one or more dispatch stations (410) of a plurality of dispatch stations associated with a service offered or requested by said resource; and
(3) matching service requestors with service providers in one or more dispatch stations (410) according to said offered and said requested services, thereby forming one or more matched service requestor/service provider groups.

2. The method of claim 1, further comprising the step of applying a rank to said one or more matched service requestor/service provider groups according to one or more run rules for use with comparing against other ranked and matched service requestor/service provider groups.

3. The method of claim 1, further comprising the step of publishing a resource event after associating a service offer or a service request with a dispatch station.

4. The method of claim 1, further comprising the step of: (4) attempting to dispatch a service after associating a service offer or a service request with a dispatch station.

5. The method of claim 1, wherein each dispatch station of said step (2) includes a list of services corresponding to each service associated therewith, each entry in said list of services includes a list of resources, and each entry in said list of resources may be associated with one or more service providers or service requestors.

6. The method of claim 5, wherein a service provider and a service requestor listed in a list of resources constitutes at least a portion of a matched service provider/service requestor group.

7. The method of claim 1, wherein said communication of said step (1) further includes an indication of one or more dispatch stations for association with said resource.

8. A method for executing a manufacturing facility process plan, said manufacturing facility comprising a plurality of resources including service providers for providing services and service requestors for requesting services, the method including associating service requestors with service providers as claimed in claim 1 and further comprising the steps of:
(1) modeling said process plan, including generating:
(a) a list of services required for said process plan,
(b) resource provider information identifying each of said services that are capable of being provided by said resource providers and the conditions under which each said service may be provided,
(c) dispatch station information, including a list of services associated with each of said one or more dispatch stations, and
(d) a list of run rules for governing execution of said process plan; and
(2) executing said process plan by performing said services required for said process plan, said step of executing comprising the substeps of:
(a) associating each service currently capable of being provided by said service providers, as determined by said resource provider information, with a corresponding dispatch station,
(b) associating each service requested by said service requestors with a corresponding dispatch station,
(c) forming matched service requestor/service provider groups in each dispatch station by grouping service requestors requesting a service with service providers capable of providing said same service,
(d) identifying one matched service requestor/service provider group for performing each service according to said run rules,
(e) verifying compliance by said one matched service requestor/service provider group with said run rules, and
(f) dispatching each matched service requestor/service provider group.

9. The method of claim 8, wherein said list of services associated with each dispatch station is user-defined.

10. The method of claim 8, wherein said step (2) further comprises the step of: (g) disassociating each service of a matched service requestor/service provider group from a corresponding dispatch station after dispatching.

11. A method for coordinating resources in a manufacturing facility comprising the method for associating service providers with service requestors as claimed in claim 1 and further, comprising the steps of:
(1) receiving service provider and service requestor information including services currently capable of being provided by the service providers and services requested by the service requestors;
(2) matching service requestors with service providers according to said services currently capable of being provided by the service providers and said services requested by the service requestors to form said one or more service provider/service requestor groups;
(3) identifying a selected service provider/service requestor group;
(4) verifying compliance of said selected service provider/service requestor group with one or more run rules; and
(5) launching a workflow for said selected service provider/service requestor group if said selected service provider/service requestor group complies with said one or more run rules.

12. The method of claim 11, wherein said selected service provider/service requestor group is identified by ranking said one or more service provider/service requestor groups according to said one or more run rules, and automatically selecting a highest ranked group.

13. The method of claim 11, wherein said selected service provider/service requestor group is identified by allowing a user to select from a list of said one or more service provider/service requestor groups ranked according to said one or more run rules.

14. A manufacturing resource coordinating system (320) comprising:
a plurality of resource servers, each resource server associated with one resource, each resource comprising either a service requestor (212) or a service provider (204), each said resource server capable of transmitting a communication including a requested or offered service;
a resource coordinator (325) for associating service requestors with service providers, said resource coordinator comprising a processor for receiving said communications from said resource servers, and a memory for implementing a plurality of dispatch stations (330), wherein each dispatch station is associated with one or more services;
wherein, upon receiving said communications, said processor associates each resource with a corresponding dispatch station, and matches service requestors with service providers in each of said dispatch stations according to said offered and said requested services, thereby forming one or more matched service requestor/service provider groups.

15. The system of claim 14, wherein said communication further includes an indication of one or more dispatch stations for association with said resource.

16. The system of claim 14, further comprising a rules component for applying a rank to said matched service requestor/service provider groups according to one or more run rules for use with comparing said one or more ranked and matched service requestor/service provider groups against one another.

17. The system of claim 14, wherein said processor publishes a resource event after associating a resource or matching a service requestor to a dispatch station.

18. The system of claim 14, wherein said processor attempts to dispatch a service after associating a resource or matching a service requestor to a dispatch station.

19. The system of claim 14, wherein each dispatch station includes a list of services corresponding to each service associated therewith, each entry in said list of services includes a list of resources, and each entry in said list of resources may be associated with one or more service providers or service requestors.

20. The system of claim 19, wherein a service provider and a service requestor listed in a list of resources constitutes at least a portion of a matched service provider/service requestor group.

21. A coordinator component (325) comprising:
a computing processor capable of receiving service provider, information including services currently capable of being provided by the service providers (204) and service requestor information including services requested by the service requestors (212);
a memory for implementing one or more dispatch stations (410) for matching service requestors with service providers according to said services currently capable of being provided by the service providers and said services requested by the service requestors, thereby forming one or more service provider/service requestor groups; and
wherein, upon identifying a selected service provider/service requestor group and verifying compliance of said selected service provided/service requestor group with one or more run rules said processor launches a workflow for said selected service provider/service requestor group.

22. The component of claim 21, wherein said processor identifies said selected service provider/service requestor group by ranking said one or more service provider/service requestor groups according to said one or more run rules, and automatically selecting a highest ranked group.

23. The component of claim 21, wherein said processor identifies said selected service provider/service requestor group by allowing a user to select from a list of said one or more service provider/service requestor groups ranked according to said one ore more run rules.

## Patentansprüche

1. Verfahren zum Zuordnen von Dienstanforderern (212) und Dienstleistern (204), wobei das Verfahren die Schritte umfasst:
(1) Empfangen einer Kommunikation von jedem einer Mehrzahl von Betriebsmitteln (430), wobei jedes Betriebsmittel entweder einen Dienstanforderer oder einen Dienstleister umfasst, wobei jede Kommunikation auch eines von einem angebotenen oder angeforderten Dienst beinhaltet;
(2) Zuordnen jedes Betriebsmittels zu einer oder mehreren Abfertigungsstationen (440) einer Mehrzahl von Abfertigungsstationen, die einem von dem Betriebsmittel angebotenen oder angeforderten Dienst zugeordnet sind; und
(3) Abstimmen von Dienstanforderern mit Dienstleistern in einer oder mehreren Abfertigungsstationen (440) gemäß den angebotenen oder angeforderten Diensten, wodurch eine oder mehrere abgestimmte Dienstanforderer/Dienstleistergruppen gebildet werden.

2. Verfahren nach Anspruch 1, ferner umfassend den Schritt zum Anwenden einer Rangfolge bei einer oder mehreren abgestimmten Dienstanforderer/Dienstleistergruppen nach einer oder mehreren Ablaufregeln zur Verwendung beim Vergleich mit anderen eingestuften und abgestimmten Dienstanforderer/Dienstleistergruppen.

3. Verfahren nach Anspruch 1, ferner umfassend den Schritt zum Herausgeben eines Betriebsmittelvorgangs nach Zuordnen eines Dienstangebots oder einer Dienstanforderung zu einer Abfertigungsstation.

4. Verfahren nach Anspruch 1, ferner umfassend den Schritt: (4) Versuch der Abfertigung eines Dienstes nach Zuordnen eines Dienstangebots oder einer Dienstanforderung zu einer Abfertigungsstation.

5. Verfahren nach Anspruch 1, worin jede Abfertigungsstation des Schritt (2) eine Liste von Diensten beinhaltet, die jedem dazu zugeordneten Dienst entspricht, jeder Eintrag in der Liste von Diensten eine Liste von Betriebsmitteln beinhaltet und jeder Eintrag in der Liste von Betriebsmitteln einem oder mehreren Dienstleistern oder Dienstanforderern zugeordnet werden kann.

6. Verfahren nach Anspruch 5, worin ein Dienstleister und ein Dienstanforderer, die in einer Liste von Betriebsmitteln angegeben sind, mindestens einen Teil einer abgestimmten Dienstleister/Dienstanforderergruppe bilden.

7. Verfahren nach Anspruch 1, worin die Kommunikation von Schritt (1) ferner eine Angabe von einer oder mehreren Abfertigungsstationen zur Zuordnung zu dem Betriebsmittel beinhaltet.

8. Verfahren zum Ausführen eines Fertigungsanlagenprozessplans, wobei die Fertigungsanlage eine Mehrzahl von Betriebsmitteln umfasst, die Dienstleister zur Bereitstellung von Diensten und Dienstanforderer zum Anfordern von Diensten beinhaltet, wobei das Verfahren Zuordnen von Dienstanforderern und Dienstleistern beinhaltet wie in Anspruch 1 beansprucht und ferner die Schritte umfasst:
(1) Modellieren des Prozessplans, darin Erzeugen:
(a) einer Liste von für den Prozessplan erforderlichen Diensten,
(b) von Betriebsmittelbereitstellerinformation, die jeden der Dienste identifiziert, der von den Betriebsmittelbereitstellern geleistet werden kann und die Bedingungen, unter denen jeder der Dienste geleistet werden kann,
(c) von Abfertigungsstationsinformation, darin eine Liste von Diensten, die jeder der einen oder mehreren Abfertigungsstationen zugeordnet sind, und
(d) einer Liste von Ablaufregeln zur Ausführung des Prozessplans; und
(2) Ausführen des Prozessplans durch Durchführen der für den Prozessplan erforderlichen Dienste, wobei der Ausführungsschritt die Unterschritte umfasst:
(a) Zuordnen jedes Dienstes, der aktuell durch die Dienstleister bereitgestellt werden kann, wie durch die Betriebsmittelbereitstellerinformation bestimmt, zu einer entsprechenden Abfertigungsstation,
(b) Zuordnen jedes Dienstes, der von den Dienstanforderern angefordert wird, zu einer entsprechenden Abfertigungsstation,
(c) Bilden von abgestimmten Dienstanforderer/Dienstleistergruppen in jeder Abfertigungsstation durch Gruppieren von Dienstanforderern, die einen Dienst anfordern, mit Dienstleistern, die diesen Dienst leisten können,
(d) Identifizieren einer abgestimmten Dienstanforderer/Dienstleistergruppe zur Durchführung jedes Dienstes nach den Ablaufregeln,
(e) Verifizieren der Einhaltung der Ablaufregeln durch die eine abgestimmte Dienstanforderer/Dienstleistergruppe, und
(f) Abfertigen jeder abgestimmten Dienstanforderer/Dienstleistergruppe.

9. Verfahren nach Anspruch 8, worin die jeder Abfertigungsstation zugeordnete Liste von Diensten vom Benutzer definiert wird.

10. Verfahren nach Anspruch 8, worin der Schritt (2) ferner den Schritt umfasst: (g) Trennen jedes Dienstes einer abgestimmten Dienstanforderer/Dienstleistergruppe von einer entsprechenden Abfertigungsstation nach Abfertigung.

11. Verfahren zum Koordinieren von Betriebsmitteln in einer Fertigungsanlage umfassend das Verfahren zum Zuordnen von Dienstleistern und Dienstanforderern wie in Anspruch 1 beansprucht und ferner umfassend die Schritte:
(1) Empfangen von Dienstleister- und Dienstanfordererinformation, die Dienste beinhaltet, die aktuell durch die Dienstleister bereitgestellt werden können und Dienste, die von den Dienstanforderern angefordert werden;
(2) Abstimmen der Dienstanforderer mit Dienstleistern gemäß den Diensten, die aktuell durch die Dienstleister bereitgestellt werden können und Diensten, die von den Dienstanforderern angefordert werden, so dass die eine oder mehrere Dienstleister/Dienstanforderergruppen gebildet werden;
(3) Identifizieren der ausgewählten Dienstleister/Dienstanforderergruppe;
(4) Verifizieren der Einhaltung der einen oder mehreren Ablaufregeln durch die ausgewählte Dienstleister/Dienstanforderergruppe; und
(5) Auslösen eines Arbeitsflusses für die ausgewählte Dienstleister/Dienstanforderergruppe, wenn die ausgewählte Dienstleister/Dienstanforderergruppe die eine oder mehreren Ablaufregeln einhält.

12. Verfahren nach Anspruch 11, worin die ausgewählte Dienstleister/Dienstanforderergruppe durch Einstufen der einen oder mehreren Dienstleister/Dienstanforderergruppen nach einer oder mehreren Ablaufregeln und automatisches Auswählen einer am höchsten eingestuften Gruppe identifiziert wird.

13. Verfahren nach Anspruch 11, worin die ausgewählte Dienstleister/Dienstanforderergruppe durch Auswahl aus einer Liste von einer oder mehreren Dienstleister/Dienstanforderergruppen, die nach einer oder mehreren Ablaufregeln eingestuft sind, durch einen Benutzer identifiziert wird.

14. Koordinationssystem (320) für Fertigungsbetriebsmittel umfassend:
eine Mehrzahl von Betriebsmittelservern, jeder Betriebsmittelserver einem Betriebsmittel zugeordnet, wobei jedes Betriebsmittel entweder einen Dienstanforderer (212) oder einen Dienstleister (204) umfasst, jeder Betriebsmittelserver eine Kommunikation übertragen kann, die einen angeforderten oder angebotenen Dienst beinhaltet;
einen Betriebsmittelkoordinator (325) zum Zuordnen von Dienstanforderern und Dienstleistern, wobei der Betriebsmittelkoordinator einen Prozessor zum Empfangen der Kommunikation von den Betriebsmittelservern umfasst und einen Speicher zum Implementieren einer Mehrzahl von Abfertigungsstationen (330), worin jede Abfertigungsstation einem oder mehreren Diensten zugeordnet ist;
worin beim Empfang der Kommunikation der Prozessor jedem Betriebsmittel eine entsprechende Abfertigungsstation zuordnet, und Dienstanforderer und Dienstleister in jeder der Abfertigungsstationen gemäß den angebotenen und angeforderten Diensten abstimmt, wodurch eine oder mehrere abgestimmte Dienstanforderer/Dienstleistergruppen gebildet werden.

15. System von Anspruch 14, worin die Kommunikation ferner eine Angabe zu einer oder mehreren Abfertigungsstationen zum Zuordnen zum Betriebsmittel beinhaltet.

16. System von Anspruch 14, ferner umfassend eine Regelkomponente zur Anwendung einer Rangordnung bei den abgestimmten Dienstanforderer/Dienstleistergruppen nach einer oder mehreren Ablaufregeln zur Verwendung beim Vergleich der einen oder mehreren eingestuften und abgestimmten Dienstanforderer/Dienstleistergruppen miteinander.

17. System von Anspruch 14, worin der Prozessor einen Betriebsmittelvorgang nach Zuordnen eines Betriebsmittels oder Abstimmen eines Dienstanforderers zu einer Abfertigungsstation herausgibt.

18. System von Anspruch 14, worin der Prozessor Abfertigung eines Dienstes nach Zuordnen eines Betriebsmittels oder Abstimmen eines Dienstanforderers zu einer Abfertigungsstation versucht.

19. System von Anspruch 14, worin jede Abfertigungsstation eine Liste von Diensten beinhaltet, die jedem dazu zugeordneten Dienst entspricht, jeder Eintrag in der Liste von Diensten eine Liste von Betriebsmitteln beinhaltet und jeder Eintrag in der Liste von Betriebsmitteln einem oder mehreren Dienstleistern oder Dienstanforderern zugeordnet werden kann.

20. System von Anspruch 19, worin ein in einer Liste von Betriebsmitteln angegebener Dienstleister und ein Dienstanforderer mindestens einen Teil einer abgestimmten Dienstleister/Dienstanforderergruppe bilden.

21. Koordinatorkomponente (325) umfassend:
einen Rechenprozessor, der Dienstleisterinformation empfangen kann, die Dienste beinhaltet, die aktuell durch die Dienstleister (204) bereitgestellt werden können und Dienstanfordererinformation, die Dienste beinhaltet, die von den Dienstanforderern (212) angefordert werden;
einen Speicher zum Implementieren einer oder mehrerer Abfertigungsstationen (410) zum Abstimmen von Dienstanforderern und Dienstleistern gemäß den Diensten, die aktuell durch die Dienstleister bereitgestellt werden können und Diensten, die von den Dienstanforderern angefordert werden, wodurch eine oder mehrere Dienstleister/Dienstanforderergruppen gebildet werden; und
worin nach Identifizieren einer ausgewählten Dienstleister/Dienstanforderergruppe und Verifizieren der Einhaltung der einen oder mehreren Ablaufregeln durch die ausgewählte Dienstleister/Dienstanforderergruppe, der Prozessor einen Arbeitsfluss für die ausgewählte Dienstleister/Dienstanforderergruppe herausgibt.

22. Komponente von Anspruch 21, worin der Prozessor die ausgewählte Dienstleister/Dienstanforderergruppe durch Einstufen der einen oder mehreren Dienstleister/Dienstanforderergruppen nach einer oder mehreren Ablaufregeln identifiziert und automatisch eine am höchsten eingestufte Gruppe auswählt.

23. Komponente von Anspruch 21, worin der Prozessor die ausgewählte Dienstleister/Dienstanforderergruppe durch Auswahl aus einer Liste von einer oder mehreren Dienstleister/Dienstanforderergruppen, die nach einer oder mehreren Ablaufregeln eingestuft sind, durch einen Benutzer identifiziert.

## Revendications

1. Procédé pour associer des demandeurs de service (212) à des fournisseurs de service (204), procédé comprenant les étapes:
(1) de réception d'une communication en provenance de chacune de multiples ressources (430), chaque ressource comprenant un demandeur de service ou un fournisseur de service, chaque communication comprenant également un service offert ou un service demandé;
(2) d'association de chaque ressource à un ou plusieurs postes de diffusion (410) parmi de multiples postes de diffusion associés à un service offert ou demandé par ladite ressource; et
(3) de mise en rapport de demandeurs de service avec des fournisseurs de service dans un ou plusieurs postes de diffusion (410) en fonction desdits services offerts et desdits services demandés, pour constituer ainsi un ou plusieurs groupes de demandeurs de service/fournisseurs de service mis en rapport.

2. Procédé selon la revendication 1, comprenant en outre l'étape d'affectation d'un rang au(x)dit(s) groupe(s) de demandeurs de service/fournisseurs de service mis en rapport en fonction d'une ou plusieurs règles de fonctionnement servant à une comparaison avec d'autres groupes de fournisseurs de service/demandeurs de service mis en rapport et dotés d'un rang.

3. Procédé selon la revendication 1, comprenant en outre l'étape de publication d'un événement de ressource après l'association d'une offre de service ou d'une demande de service avec un poste de diffusion.

4. Procédé selon la revendication 1, comprenant en outre l'étape de (4): tentative de diffusion d'un service après l'association d'une offre de service ou d'une demande de service à un poste de diffusion.

5. Procédé selon la revendication 1, dans lequel chaque poste de diffusion de ladite étape (2) comprend une liste de services correspondant à chaque service qui lui est associé, chaque entrée de ladite liste de services comprend une liste de ressources, et chaque entrée de ladite liste de ressources peut être associée à un ou plusieurs fournisseurs de service ou demandeurs de service.

6. Procédé selon la revendication 5, dans lequel un fournisseur de service et un demandeur de service énumérés dans une liste de ressources constituent au moins une partie d'un groupe de fournisseurs de service/demandeurs de service mis en rapport.

7. Procédé selon la revendication 1, dans lequel ladite communication de ladite étape (1) comprend en outre une indication d'un ou plusieurs postes de diffusion destiné(s) à être associé(s) à ladite ressource.

8. Procédé pour exécuter un plan de processus d'installation de fabrication, ladite installation de fabrication comprenant de multiples ressources comprenant des fournisseurs de service pour fournir des services et des demandeurs de service pour demander des services, procédé comprenant l'association de demandeurs de service à des fournisseurs de service selon la revendication 1 et comprenant en outre les étapes:
(1) de modélisation dudit plan de processus, comprenant la génération:
(a) d'une liste de services requis pour ledit plan de processus,
(b) d'informations de fournisseurs de service identifiant chacun desdits services qui peuvent être fournis par lesdits fournisseurs de service et les conditions dans lesquelles chaque service peut être fourni,
(c) d'informations de poste de diffusion comprenant une liste de services associés audit ou à chacun desdits postes de diffusion, et
(d) d'une liste de règles de fonctionnement pour régir l'exécution dudit plan de processus; et
(2) d'exécution dudit plan de processus en rendant lesdits services requis pour ledit plan de processus, ladite étape d'exécution comprenant les sous-étapes :
(a) d'association de chaque service pouvant actuellement être fourni par lesdits fournisseurs de service, comme déterminé par lesdites informations de fournisseurs de service, à un poste de diffusion correspondant,
(b) d'association de chaque service demandé par lesdits demandeurs de service à un poste de diffusion correspondant,
(c) de formation de groupes de demandeurs de service/fournisseurs de service mis en rapport dans chaque poste de diffusion en regroupant des demandeurs de service demandant un service avec des fournisseurs de service capables de fournir ledit même service,
(d) d'identification de l'un des groupes de demandeurs de service/fournisseurs de service mis en rapport pour rendre chaque service conformément auxdites règles de fonctionnement,
(e) de vérification du respect desdites règles de fonctionnement par ledit groupe de demandeurs de service/fournisseurs de service mis en rapport, et
(f) de diffusion de chaque groupe de demandeurs de service/fournisseurs de service mis en rapport.

9. Procédé selon la revendication 8, dans lequel ladite liste de services associés à chaque poste de diffusion est définie par l'utilisateur.

10. Procédé selon la revendication 8, dans lequel ladite étape (2) comprend en outre l'étape de: (g) dissociation de chaque service d'un groupe de demandeurs de service/fournisseurs de service mis en rapport du poste de diffusion correspondant, après la diffusion.

11. Procédé pour coordonner des ressources dans une installation de fabrication comprenant le procédé pour associer des fournisseurs de service à des demandeurs de service selon la revendication 1 et comprenant en outre les étapes :
(1) de réception d'informations de fournisseur de service et de demandeur de service comprenant des services pouvant actuellement être fournis par des fournisseurs de service et des services demandés par les demandeurs de service;
(2) de mise en rapport de demandeurs de service avec des fournisseurs de service conformément auxdits services pouvant actuellement être fournis par les fournisseurs de service et auxdits services demandés par les demandeurs de service pour former ledit ou lesdits groupes de fournisseurs de service/demandeurs de service;
(3) d'identification d'un groupe de fournisseurs de service/demandeurs de service sélectionné;
(4) de vérification du respect d'une ou plusieurs règles de fonctionnement par ledit groupe de fournisseurs de service/demandeurs de service sélectionné; et
(5) de lancement d'un flux de travail pour ledit groupe de fournisseurs de service/demandeurs de service sélectionné si celui-ci respecte ladite ou lesdites règles de fonctionnement.

12. Procédé selon la revendication 11, dans lequel ledit groupe de fournisseurs de service/demandeurs de service sélectionné est identifié en dotant d'un rang ledit ou lesdits groupes de fournisseurs de service/demandeurs de service en fonction de ladite ou desdites règles de fonctionnement, et en sélectionnant automatiquement un groupe d'ordre le plus élevé.

13. Procédé selon la revendication 11, dans lequel ledit groupe de fournisseurs de service/demandeurs de service sélectionné est identifié en permettant à un utilisateur de sélectionner dans une liste dudit ou desdits groupes de fournisseurs de service/demandeurs de service dotés d'un rang conformément à ladite ou auxdites règles de fonctionnement.

14. Système de coordination de ressources de fabrication (320) comprenant:
de multiples serveurs de ressource, chaque serveur de ressource étant associé à une ressource, chaque ressource comprenant un demandeur de service (212) ou un fournisseur de service (204), chaque serveur de ressource étant capable de transmettre une communication comprenant un service demandé ou offert;
un coordinateur de ressource (325) pour associer des demandeurs de service à des fournisseurs de service, ledit coordinateur de ressource comprenant un processeur pour recevoir lesdites communications en provenance desdits serveurs de ressource, et une mémoire pour mettre en oeuvre de multiples postes de diffusion (330), chaque poste de diffusion étant associé à un ou plusieurs services;
dans lequel, à la réception desdites communications, ledit processeur associe chaque ressource à un poste de diffusion correspondant, et met en rapport des demandeurs de service avec des fournisseurs de service dans chacun desdits postes de diffusion conformément auxdits services offerts et auxdits services demandés, pour ainsi former un ou plusieurs groupes de fournisseurs de service/demandeurs de service mis en rapport.

15. Système selon la revendication 14, dans lequel ladite communication comprend en outre une indication d'un ou plusieurs postes de diffusion destinés à être associés à ladite ressource.

16. Système selon la revendication 14, comprenant en outre un organe applicateur de règles pour affecter un rang auxdits groupes de demandeurs de service/fournisseurs de service mis en rapport en fonction d'une ou de plusieurs règles du fonctionnement servant à une comparaison mutuelle desdits plusieurs groupes de fournisseurs de service/demandeurs de service mis en rapport et dotés d'un rang.

17. Système selon la revendication 14, dans lequel ledit processeur publie un événement de ressource après l'association d'une ressource ou la mise en rapport d'un demandeur de service avec un poste de diffusion.

18. Système selon la revendication 14, dans lequel ledit processeur tente de diffusion un service après l'association d'une ressource ou la mise en rapport d'un demandeur de service avec un poste de diffusion.

19. Système selon la revendication 14, dans lequel chaque poste de diffusion comprend une liste de services correspondant à chaque service qui lui est associé, chaque entrée de ladite liste de services comprend une liste de ressources, et chaque entrée de ladite liste de ressources peut être associée à un ou plusieurs fournisseurs de service ou demandeurs de service.

20. Système selon la revendication 19, dans lequel un fournisseur de service et un demandeur de service énumérés dans une liste de ressources constituent au moins une partie d'un groupe de fournisseurs de service/demandeurs de service mis en rapport.

21. Organe coordinateur (325) comprenant:
un processeur de calcul capable de recevoir des informations de fournisseur de service comprenant des services pouvant actuellement être fournis par les fournisseurs de service (204) et des informations de demandeur de service comprenant des services demandés par les demandeurs de service (212);
une mémoire pour mettre en oeuvre un ou plusieurs postes de diffusion (410) pour mettre des demandeurs de service en rapport avec des fournisseurs de service conformément auxdits services pouvant actuellement être fournis par les fournisseurs de service et auxdits services demandés par les demandeurs de service, pour ainsi former un ou plusieurs groupes de fournisseurs de service/demandeurs de service; et
dans lequel, lors de l'identification d'un groupe de fournisseurs de service/demandeurs de service sélectionné et de la vérification du respect d'une ou plusieurs règles de fonctionnement par ledit groupe de fournisseurs de service/demandeurs de service sélectionné, ledit processeur lance un flux de travail pour ledit groupe de fournisseurs de service/demandeurs de service sélectionné.

22. Organe selon la revendication 21, dans lequel ledit processeur identifie ledit groupe de fournisseurs de service/demandeurs de service sélectionné en dotant d'un rang ledit ou lesdits groupes de fournisseurs de service/demandeurs de service en fonction de ladite ou desdits règles de fonctionnement, et en sélectionnant automatiquement un groupe de rang le plus élevé.

23. Organe selon la revendication 21, dans lequel ledit processeur identifie ledit groupe de fournisseurs de service/demandeurs de service sélectionné en permettant à un utilisateur de sélectionner dans une liste dudit ou desdits groupes de fournisseurs de service/demandeurs de service dotés d'un rang conformément à ladite ou auxdites règles de fonctionnement.
